# EUROPEAN PATENT SPECIFICATION

(11) **EP 4 022 817 B1**
(45) Date of publication and mention of the grant of the patent: **21.08.2024**
(21) Application number: 19769101.7
(22) Date of filing: 10.09.2019
(51) Int. Cl.: H04L 5/00

(54) **NETWORK ACCESS NODE AND CLIENT DEVICE FOR ADAPTIVE DMRS PATTERNS**
NETZZUGANGSKNOTEN UND CLIENT-VORRICHTUNG FÜR ADAPTIVE DMRS-MUSTER
NOEUD D'ACCÈS AU RÉSEAU ET DISPOSITIF CLIENT POUR LES MODÈLES ADAPTATIFS DE DMRS

(43) Date of publication of application: 06.07.2022
(73) Proprietor: Huawei Technologies Co., Ltd., Longgang District Shenzhen, Guangdong 518129 (CN)
(72) Inventor: HU, Wenquan, 16440 Kista (SE); WANG, Neng, 16440 Kista (SE); LINDOFF, Bengt, 16440 Kista (SE); DUAN, Weiming, 16440 Kista (SE); BI, Xiaoyan, 16440 Kista (SE); HU, Sha, 16440 Kista (SE)
(74) Representative: Gill Jennings & Every LLP
(86) International application number: PCT/EP2019/074099
(87) International publication number: WO 2021/047759

(56) References cited:
- US-A1- 2017 272 141
- US-A1- 2018 241 508
- HUAWEI ET AL: "Sidelink reference signal design for NR V2X", vol. RAN WG1, no. Xi'an, China; 20190408 - 20190412, 2 April 2019 (2019-04-02), XP051707060, Retrieved from the Internet <URL:http://www.3gpp.org/ftp/tsg%5Fran/WG1%5FRL1/TSGR1%5F96b/Docs/R1%2D1903945%2Ezip> [retrieved on 20190402]

## Description

### Technical Field

The invention relates to a network access node and a client device for adaptive DMRS patterns. Furthermore, the invention also relates to corresponding methods and a computer program.

### Background

In 3GPP new radio (NR) multiple numerologies are supported, and relationships between subcarrier-spacing (SCS) and cyclic-prefix (CP) type are shown given in TS 38.211 f40. In orthogonal frequency division multiplexing (OFDM) systems to mitigate inter-symbol interference (ISI) and inter-carrier interference (ICI), the CP length has to be long enough to cover the largest delay spread of the radio channel. Moreover, it has been observed that channel delay is much longer in non-line-of-sight (NLOS) environment compared to line-of-sight (LOS). In NR, extended CP is only supported for 60kHz SCS. Hence, when using higher numerology with larger SCS, the CP length can be insufficient, and a mechanism for dealing with excessive channel delay spread is of importance in NR evolution.

In NR, the CP-type is a cell-specific parameter, which means that if the CP-length is changed in a cell, it applies to all user equipments (UEs) camping in the same cell. This yields an inflexible design, since some UEs located farther away from a gNB experience longer delay than those UEs located closer to the gNB. To improve connections of those cell-edge UEs, it is better to configure a longer CP which however increases the overhead in the system and results in a lower spectrum-efficiency.

When the CP length is insufficient, strong ISI and ICI occur and destroy the orthogonality among subcarriers. An exemplary scenario is with high speed train with a large Doppler frequency, where strong ICI can occur. The ICI and/or ISI can create an error-floor in bit-error-rate (BER) and block-error-rate (BLER). Although advanced receivers, such as time-domain channel shortening (CS) or iteratively interference-cancellation (IC) receivers can be applied these receivers require accurate channel estimates (CEs) at hand. Superimposed by ISI and/or ICI, channel estimations based on wideband reference signal, e.g., demodulation reference signals (DMRS) or phase tracking reference signal (PTRS), can be inaccurate and degrade the performance of such advanced receivers. Further, inaccurate channel estimations can also cause potential issues for power-delay-profile (PDP) estimation or filter-design for denoising channel estimation.

In NR Rel. 15, two configuration types of DMRS pattern have been specified for both downlink (DL) and uplink (UL) DMRS. DMRS configuration type 1 uses an Interleaved Frequency Domain Multiple Access (IFDMA)-based approach with an aim to be used for scenarios of up to 8 orthogonal ports, while configuration type 2 uses 2 frequency division orthogonal cover code (2-FD-OCC) with an aim for scenarios of up to 12 orthogonal ports. Detailed description of DMRS pattern for PDSCH can be found in section 7.4.1.1.2, with mapping to physical resources in TS 38.211 f40. For DMRS configuration type 1, the DMRS port indexing for two-symbol DMRS with CP-OFDM, and DMRS port indexing in code division multiplexing (CDM) group is {0,1,4,5}, and {2,3,6,7}. For DMRS configuration type 2, DMRS port indexing in CDM group is {0,1,6,7}, {2,3,8,9}, and {4,5,10,11}.

US 2018/241508 A1 describes V2X performance enhancements in high speed environments.

US 2017/272141 A1 describes a communication apparatus including control circuitry and a transmitter. The control circuitry selects a DMRS mapping pattern from among a plurality of DMRS mapping patterns. The DMRS mapping patterns include a first DMRS mapping pattern with first DMRS resource elements to which first DMRSs in a first half of a subframe are mapped and second DMRS resource elements to which second DMRSs in a second half of the subframe are mapped. The transmitter transmits downlink control information that includes a plurality of bits indicating the selected DMRS mapping pattern.

HUAWEI ET AL: "Sidelink reference signal design for NR V2X", 3GPP DRAFT; R1-1903945, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, vol. RAN WG1, no. Xi'an, China; 20190408 - 20190412 2 April 2019 (URL:http://www.3gpp.org/ftp/tsg%5Fran/WG 1 %5FRL 1 /TSG R 1 %5F96b/Docs/R1%2D1903945%2Ezip) describes sidelink reference signal design for NR V2X.

### Summary

In accordance with the invention, there is provided a network access node for a wireless communication system, a client device for a wireless communication system, a method for a network access node, a method for a client device, and computer programs, as set forth in the appended claims. The scope of protection is defined by the appended independent claims, dependent claims constitute embodiments of the invention, and any examples described herein that fall outside of the scope of the claims are included for illustrative purposes only.

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

According to a first aspect of the invention, the above mentioned and other objectives are achieved with a network access node for a wireless communication system, the network access node being according to claim 1.

An advantage of the network access node according to the first aspect is that by adapting the DMRS pattern to excessive delay spread through nulling a more robust solution is provided compared to conventional solution. This also means that the both ICI and ISI are reduced resulting in improved channel estimation. With improved channel estimations advanced receivers can perform better at the receiver side, i.e. at the client device.

In an implementation form of a network access node according to the first aspect, no transmission is scheduled in the nulled resource elements of the second DMRS pattern.

An advantage with this implementation form is that ISI and/or ICI can be relieved under insufficient CP cases. Further, enhanced channel estimation algorithms can be used to obtain accurate channel estimation with DMRS according to nulling patterns.

In an implementation form of a network access node according to the first aspect, the DMRS pattern of the second DMRS pattern forms a comb structure.

The second DMRS pattern can in cases form a comb structure with sparse properties.

An advantage with this implementation form is that the comb structure can be applied in the current NR standard. By applying nulling so as to obtain a comb structure is equivalent to increase the SCS of the DMRS symbols. Thereby, also improved decoding processing at the client device can be applied.

In an implementation form of a network access node according to the first aspect, the second DMRS pattern is of DMRS configuration type 1, and wherein resource elements for antenna ports 0/1/4/5 or antenna ports 2/3/6/7 are nulled.

An advantage with this implementation form is that this implementation form is compatible with the current NR standard.

In an implementation form of a network access node according to the first aspect, the second DMRS pattern is DMRS configuration type 2, and wherein at least resource elements for antenna ports 0/1/6/7, 2/3/8/9 or 4/5/10/11 are nulled.

An advantage with this implementation form is that this implementation form is compatible with the current NR standard.

In an implementation form of a network access node according to the first aspect, the network access node is further configured to
upon determining that the delay spread of the radio channel exceeds the cyclic prefix length adapting the transmission of the DMRSs according to the second DMRS pattern in at least one of: numerology, subcarrier spacing, and radio access technology.

An advantage with this implementation form is that further measures can be taken to combat excessive delay spread thereby reducing the negative influence of the excessive delay spread even further.

In an implementation form of a network access node according to the first aspect, determining that the delay spread of the radio channel exceeds the cyclic prefix length comprises
receive a first control message from the client device, wherein the first control message indicates that the delay spread of the radio channel exceeds the cyclic prefix length.

An advantage with this implementation form is that the network access node is informed directly by the client device through control signalling of the excessive delay spread. Since the client device is acting as a receiver accurate channel performance can be performed by the client device.

In an implementation form of a network access node according to the first aspect, the first control message is received in a physical uplink control channel, PUCCH, a medium access control (MAC) control element, MAC-CE, or in radio resource control, RRC, signaling.

An advantage with this implementation form is that conventional control signalling procedures can be used which implies reduced complexity when implementing the present solution.

In an implementation form of a network access node according to the first aspect, the network access node is further configured to
transmit a second control message to the client device, wherein the second control message indicates the transmission of DMRSs according to the second DMRS pattern.

An advantage with this implementation form is that the client device is informed through control signalling about the change in DMRS pattern. Thereby, the client device does not have to blind decode received DMRS to realize that the DMRS pattern has changed. This means reduced decoding complexity but higher payload.

In an implementation form of a network access node according to the first aspect, the second control message is transmitted in a physical downlink control channel, PDCCH, a MAC-CE, or in RRC signaling. An advantage with this implementation form is that conventional control signalling procedures can be used which implies reduced complexity when implementing the present solution.

In an implementation form of a network access node according to the first aspect, the second control message is an indication bit, wherein a "1" value of the indication bit indicates transmission of DMRSs according to the second DMRS pattern and a "0" value of the indication bit indicates transmission of DMRSs according to the first DMRS pattern, or vice versa.

An advantage with this implementation form is that only 1-bit information is sent to the client device to notify the change of DMRS pattern which yields a small payload in the system.

According to a second aspect of the invention, the above mentioned and other objectives are achieved with a client device for a wireless communication system, the client device being according to claim 6.

An advantage of the client device according to the second aspect is that by adapting the DMRS pattern to excessive delay spread through nulling a more robust solution is provided compared to conventional solution. This also means that the both ICI and/or ISI are reduced resulting in improved channel estimation. With improved channel estimations advanced receivers can perform better at the receiver side, i.e. at the client device.

In an implementation form of a client device according to the second aspect, no transmission is scheduled on the nulled resource elements of the second DMRS pattern.

An advantage with this implementation form is that ISI and ICI can be relieved under wanted insufficient CP cases. Further, enhanced channel estimation algorithms can be applied to obtain accurate channel estimation based on DMRS according to detailed nulling patterns.

In an implementation form of a client device according to the second aspect, wherein the DMRS pattern of the second DMRS pattern forms a comb structure.

An advantage with this implementation form is that the comb structure can be applied in the current NR standard. By applying nulling so as to obtain a comb structure is equivalent to increase the SCS of the DMRS symbols. Thereby, also improved decoding processing at the client device can be applied.

In an implementation form of a client device according to the second aspect, the second DMRS pattern is of DMRS configuration type 1, and wherein resource elements for antenna ports 0/1/4/5 or antenna ports 2/3/6/7 are nulled.

An advantage with this implementation form is that this implementation form is compatible with the current NR standard.

In an implementation form of a client device according to the second aspect, the second DMRS pattern is DMRS configuration type 2, and wherein at least resource elements for antenna ports 0/1/6/7, 2/3/8/9 or 4/5/10/11 are nulled.

An advantage with this implementation form is that this implementation form is compatible with the current NR standard.

In an implementation form of a client device according to the second aspect, the first control message is transmitted in a PUCCH, a MAC-CE or in RRC signaling.

An advantage with this implementation form is that conventional control signalling procedures can be used which implies reduced complexity when implementing the present solution.

In an implementation form of a client device according to the second aspect, the second control message is received in a PDCCH, a MAC-CE, or in RRC signaling.

An advantage with this implementation form is that conventional control signalling procedures can be used which implies reduced complexity when implementing the present solution.

In an implementation form of a client device according to the second aspect, the second control message is an indication bit, wherein a "1" of the indication bit indicates transmission of DMRSs according to the second DMRS pattern and a "0" of the indication bit indicates transmission of DMRSs according to the first DMRS pattern, or vice versa.

An advantage with this implementation form is that only 1-bit information is sent to the client device to notify the change of DMRS pattern which yields a small payload in the system.

According to a third aspect of the invention, the above mentioned and other objectives are achieved with a method for a network access node, the method according to claim 9.

The method according to the third aspect can be extended into implementation forms corresponding to the implementation forms of the network access node according to the first aspect. Hence, an implementation form of the method comprises the feature(s) of the corresponding implementation form of the network access node.

The advantages of the methods according to the third aspect are the same as those for the corresponding implementation forms of the network access node according to the first aspect.

According to a fourth aspect of the invention, the above mentioned and other objectives are achieved with a method for a client device, the method according to claim 10.

The method according to the fourth aspect can be extended into implementation forms corresponding to the implementation forms of the client device according to the second aspect. Hence, an implementation form of the method comprises the feature(s) of the corresponding implementation form of the client device. The advantages of the methods according to the fourth aspect are the same as those for the corresponding implementation forms of the client device according to the second aspect.

The invention also relates to a computer program, characterized in program code, which when run by at least one processor causes said at least one processor to execute any method according to embodiments of the invention, as defined in claims 11 and 12. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the invention will be apparent from the following detailed description.

### Brief Description of the Drawings

The appended drawings are intended to clarify and explain different embodiments of the invention, in which:
- Fig. 1 shows a network access node according to an embodiment of the invention;
- Fig. 2 shows a flowchart of a method for a network access node according to an embodiment of the invention;
- Fig. 3 shows a client device according to an embodiment of the invention;
- Fig. 4 shows a flowchart of a method for a client device according to an embodiment of the invention;
- Fig. 5 shows a wireless communication system according to an embodiment of the invention;
- Fig. 6 illustrates nulling of DMRS according to an embodiment of the invention;
- Fig. 7 shows a signalling scheme according to an embodiment of the invention;
- Fig. 8 shows a signalling scheme according to an embodiment of the invention;
- Fig. 9 shows a signalling scheme according to an embodiment of the invention;
- Fig. 10 illustrates processing at a client device according to an embodiment of the invention; and
- Fig. 11 shows a flowchart of a processing method for a client device according to an embodiment of the invention.

### Detailed Description

As previously described extended CP is only introduced for 60kHz SCS in NR. For other numerologies, only scaled normal CPs are supported, and can be insufficient under excessive channel delay spread. When there is excessive channel delay, i.e. longer than the configured CP, the channel estimation accuracy suffers from strong ISI and ICI, which can decrease the throughput and increase the complexity of advanced receivers to mitigate the interference.

The inventors have noticed that robust DMRS transmission pattern by DCI format 1_0 and some advanced DMRS patterns in DMRS configuration 1 scheduled by DCI format 1_1 can be used for enhancing channel estimation at the UE side in NR to combat excessive delay spread of the radio channel. For DCI Format 1_0 in NR, a UE assumes that a single symbol front-loaded DMRS of configuration type 1 on DMRS port 1000 is transmitted, and that all the remaining orthogonal antenna ports are not associated with transmission of physical downlink shared channel (PDSCH) to another UE. For DCI Format 1_1, advanced multiple input multiple output (MIMO) schemes are supported by antenna port indication for both single user MIMO (SU-MIMO) and multi user MIMO (MU-MIMO). Antenna port(s) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports {*p*₀,...,*p*_{υ-1}} shall be determined according to the ordering of DMRS port(s) given by Tables 7.3.1.2.2-1/2/3/4 in TS 38.214 f40.

Besides, corresponding UE assistant signalling and network indication signalling can be proposed to notify the network and/or the UE to adapt its MIMO scheme when excessive delay spread scenarios occur. Hence, an objective of embodiments of the invention is to propose a mechanism of network adaptation, e.g., enabling robust DMRS pattern when the UE suffers from excessive channel delay spread. Even adapted numerology/carrier/radio access technology (RAT) can be applied. The aim is to eliminate the excessive channel delay spread impact, which is an explicit way for adapted bandwidth part (BWP), carrier and/or radio access technology (RAT).

Specifically, for enabling a robust DMRS pattern, a DMRS configuration is enabled such that only a fractional of REs in the OFDM symbol is carrying the DMRS where the other REs are nulled, i.e., not used for transmitting either to the current UE or to other UE(s). This is an implicit way to eliminate the impact of excessive channel delay spread. For example, with a specific DMRS configurations, e.g., all odd-indexed REs are nulled in the OFDM symbol that carries DMRS, then in time-domain the RS symbol can have two identical parts, and the first part acts like a CP for the second one. Based on such properties a CE with good quality can be obtained free from ISI and ICI under excessive channel delay scenarios. For the adapted robust DMRS pattern sub-solution, corresponding enhanced channel estimation algorithms for the UE to improve channel estimate are described. The quality of channel estimation is crucial for successfully applying interference suppressing or cancellation receivers when decoding data channel as previously explained. For the above reasons, the present disclosure presents a solution applicable in a network access node, a client device, a wireless communication system, in corresponding methods and in a computer program.

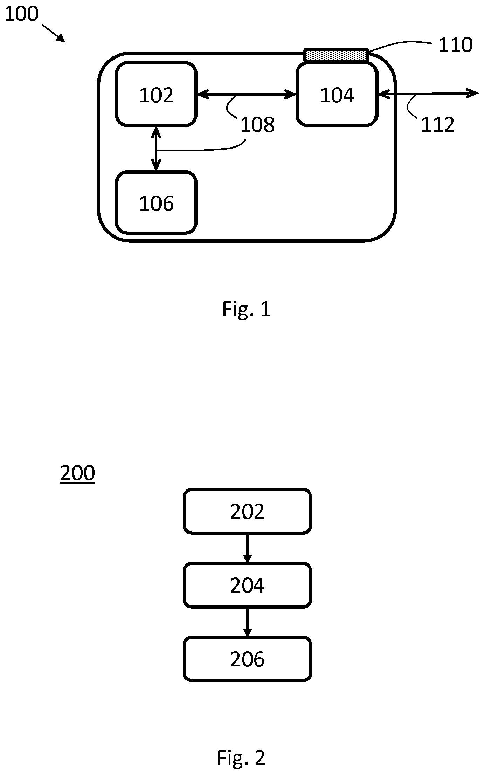

Fig. 1 shows a network access node 100 according to an embodiment of the invention. In the embodiment shown in Fig. 1, the network access node 100 comprises a processor 102, a transceiver 104 and a memory 106. The processor 102 is coupled to the transceiver 104 and the memory 106 by communication means 108 known in the art. The network access node 100 may be configured for both wireless and wired communications in wireless and wired communication systems, respectively. The wireless communication capability is provided with an antenna or antenna array 110 coupled to the transceiver 104, while the wired communication capability is provided with a wired communication interface 112 coupled to the transceiver 104. That the network access node 100 is configured to perform certain actions can in this disclosure be understood to mean that the network access node 100 comprises suitable means, such as e.g. the processor 102 and the transceiver 104, configured to perform said actions.

According to embodiments of the invention the network access node 100 is configured to transmit DMRSs according to a first DMRS pattern in a radio channel to a client device 300. The network access node 100 is further configured to upon determining that a delay spread of the radio channel exceeds a cyclic prefix length of the first DMRS pattern obtaining a second DMRS pattern formed from the first DMRS pattern with one or more nulled resource elements associated with DMRSs. The network access node 100 is further configured to transmit DMRSs according to the second DMRS pattern to the client device 300.

Fig. 2 shows a flow chart of a corresponding method 200 which may be executed in a network access node 100, such as the one shown in Fig. 1. The method 200 comprises transmitting 202 DMRSs according to a first DMRS pattern in a radio channel to a client device. The method 200 further comprises upon determining 204 that a delay spread of the radio channel exceeds a cyclic prefix length of the first DMRS pattern obtaining a second DMRS pattern formed from the first DMRS pattern with one or more nulled resource elements associated with DMRSs. The method 200 further comprises transmitting 206 DMRSs according to the second DMRS pattern to the client device 300.

The second DMRS can e.g. be obtained by reserving orthogonal DMRS ports as nulled subcarriers without data transmission to the client device 300 and without DMRS transmission to another client device. Hence, the first DMRS pattern is nulled in a suitable manner so as to obtaining the second DMRS pattern.

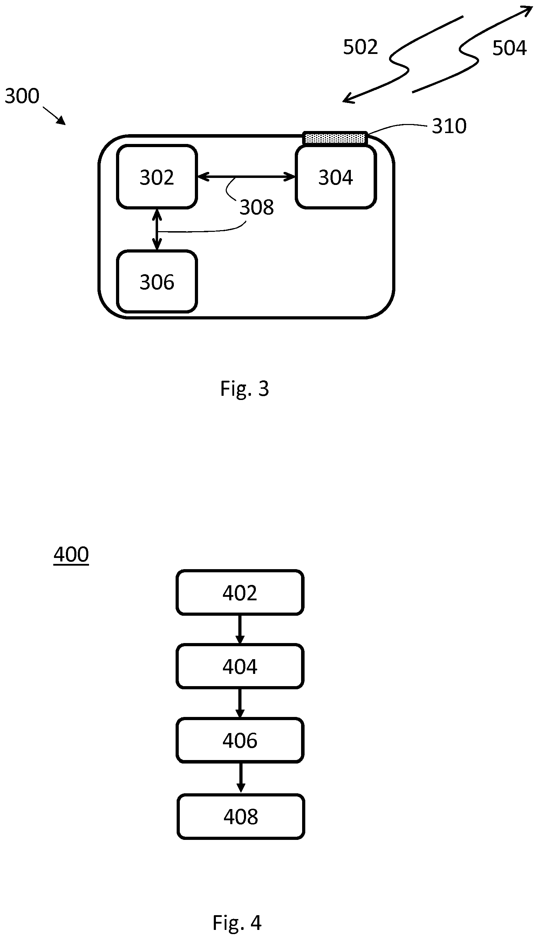

Fig. 3 shows a client device 300 according to an embodiment of the invention. In the embodiment shown in Fig. 3, the client device 300 comprises a processor 302, a transceiver 304 and a memory 306. The processor 302 is coupled to the transceiver 304 and the memory 306 by communication means 308 known in the art. The client device 300 further comprises an antenna or antenna array 310 coupled to the transceiver 304, which means that the client device 300 is configured for wireless communications in a wireless communication system. That the client device 300 is configured to perform certain actions can in this disclosure be understood to mean that the client device 300 comprises suitable means, such as e.g. the processor 302 and the transceiver 304, configured to perform said actions.

According to embodiments of the invention the client device 300 is configured to receive DMRSs according to a first DMRS pattern in a radio channel from a network access node 100. The client device 300 is further configured to, upon determining that a delay spread of the radio channel exceeds a cyclic prefix length of the first DMRS pattern, transmit a first control message 502 to the network access node 100. The first control message 502 indicates that the delay spread of the radio channel exceeds the cyclic prefix length. The client device 300 is further configured to receive a second control message 504 from the network access node 100. The second control message 504 indicates the transmission of DMRSs according to a second DMRS pattern. The second DMRS pattern is formed from the first DMRS pattern with one or more nulled resource elements associated with DMRSs. The client device 300 is further configured to receive DMRSs according to the second DMRS pattern from the network access node 100.

The client device 300 can determine that delay spread of the radio channel exceeds a cyclic prefix length of the first DMRS pattern using any method known in the art. For example, the client device 300 may use a power-delay-profile (PDP) estimation of the channel for determining the delay spread. Another example is when the device client observes that the received signal suffers from strong ISI and/or ICI.

Fig. 4 shows a flow chart of a corresponding method 400 which may be executed in a client device 300, such as the one shown in Fig. 3. The method 400 comprises receiving 402 DMRSs according to a first DMRS pattern in a radio channel from a network access node 100. The method 400 further comprises, upon determining 404 that a delay spread of the radio channel exceeds a cyclic prefix length of the first DMRS pattern, transmit a first control message 502 to the network access node 400. The first control message 502 indicates that the delay spread of the radio channel exceeds the cyclic prefix length. The method 400 further comprises receiving 406 a second control message 504 from the network access node 100. The second control message 504 indicates the transmission of DMRSs according to a second DMRS pattern. The second DMRS pattern is formed from the first DMRS pattern with one or more nulled resource elements associated with DMRSs. The method 400 further comprises receiving 408 DMRSs according to the second DMRS pattern from the network access node 100.

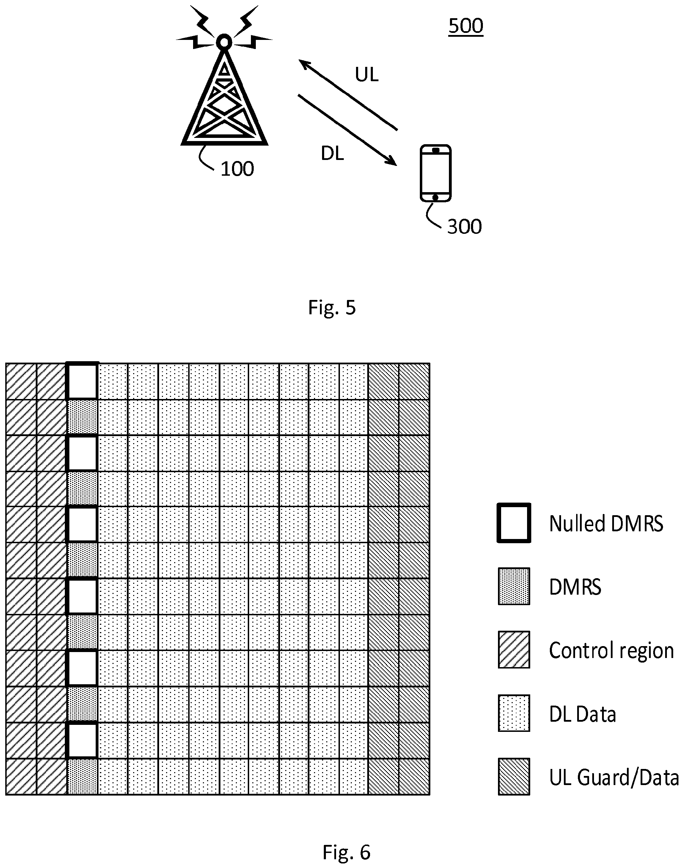

Fig. 5 shows a wireless communication system 500 according to an embodiment of the invention. The wireless communication system 500 comprises a network access node 100 and a client device 300 configured to operate in the wireless communication system 500. For simplicity, the wireless communication system 500 shown in Fig. 5 only comprises one network access node 100 and one client device 300. However, the wireless communication system 500 may comprise any number of network access nodes 100 and any number of client devices 300 without deviating from the scope of the invention. In the wireless communication system 500, the network access node 100 and the client device 300 are configured to communicate with each other in the downlink (DL) and in the uplink (UL) using conventional protocols and channels according to suitable communication standards. The wireless communication system 500 can e.g. be LTE, NR or a multi-RAT system comprising more than one RAT.

In the following disclosure further embodiments of the invention are explained and described in a NR context. Hence, terminology, concepts and system design are used from NR. Especially, the network access node 100 corresponds to a gNB 100 and the client device 300 corresponds to a UE 300. However, embodiments of the invention are not limited thereto and are only limited by the appended claims.

In embodiments, due to nulling of REs of DMRS patterns according to the invention the gNB 100 only transmits DMRS on a fraction of REs on the OFDM symbol corresponding to DMRS transmission. A fraction herein means that the transmission is performed on less than 100 % of the REs. A fraction could e.g. be given in percent such as 50% and 25% or in parts such as 1/2 and 1/4. A special case is elaborated which enables an enhanced channel estimation algorithm for combating excessive delay spread of a radio channel. It is noted that the gNB 100 is not limited to transmission of a specific DMRS pattern but can transmit any DMRS pattern comprising nulled REs. However, a comb-like and sparse DMRS pattern depicted in Fig. 6 has some particular advantages. In the DMRS pattern shown in Fig. 6 all the odd-indexed REs (or sub-carriers) corresponding to previous DMRS positions are nulled and do not carry data or DMRS or any other reference signals. That is, if the nulled REs would be allocated to another UE, the gNB 100 will re-allocate these radio resources to other radio resources which are not nulled resources. In another example all even-indexed REs (or sub-carriers) of the DMRS pattern could instead be nulled however, the channel estimation algorithm at the receiver side changes accordingly.

In NR Rel. 15, DMRS configuration type 1 is suitable for the construction of a comb-like and sparse DMRS pattern according to embodiments of the invention. In the existing antenna port indication Table 7.3.1.2.2-1 shown below, all the possible cases supporting enhanced channel estimation are listed with letter "Y" (i.e. YES), i.e. values 3, 4 and 7. For all those indicated cases, they share the same property, i.e.: antenna port(s) from a single CDM group are indicated; only port 0, port 1, port 4, and port 5 on the even subcarriers are applicable; and other orthogonal DMRS ports are reserved as null subcarriers without data transmission for the same UE and also without DMRS transmission for another UE. It is noted that values 12-15 in Table 7.3.1.2.2-1 are reserved, and there are only three configurations marked "Y" that support enhanced CE, it is possible to use three reserved values to indicate.

**Table 7.3.1.2.2-1: Antenna port(s) (1000 + DMRS port), dmrs-Type=1, maxLength=1**

| One Codeword: Codeword 0 enabled / Codeword 1 disabled | | | |
|---|---|---|---|
| Value | Number of DMRS CDM group(s) without data | DMRS port(s) | Support enhanced CE or not |
| 0 | 1 | 0 | N |
| 1 | 1 | 1 | N |
| 2 | 1 | 0,1 | N |
| 3 | 2 | 0 | Y |
| 4 | 2 | 1 | Y |
| 5 | 2 | 2 | N |
| 6 | 2 | 3 | N |
| 7 | 2 | 0,1 | Y |
| 8 | 2 | 2,3 | N |
| 9 | 2 | 0-2 | N |
| 10 | 2 | 0-3 | N |
| 11 | 2 | 0,2 | N |
| 12-15 | Reserved | Reserved | |

For Table 7.3.1.2.2-2 (not shown), i.e. for DMRS type 1 and maxlength = 2, the values for 3, 4, 7, 12, 13, 16, 17, 20, 22, 24, 26 and 28 are suitable for DMRS patterns according to embodiments of the invention.

It should further be noted that similar techniques can be applied for DMRS for the physical uplink shared channel (PUSCH). However, since the UL transmission is fully controlled by network scheduler, such as case is a network implementation for uplink data scheduling to enable the comb-like and sparse DMRS pattern in the UL.

Furthermore, for the gNB 100 to be able to apply an adjustment such as an adapted BWP, carrier, RAT and/or DMRS antenna port configuration, the UE 300 may send a first control message 502 in the UL to notify about excessive channel delay of the radio channel. On the other hand, the gNB 100 can also detect an excessive delay spread on its own. For example, through uplink channel estimation in a time-division-duplex (TDD) mode or by detecting that the UE 300 is in the cell-edge and make adjustment(s) without signaling assistance from the UE 300. In both cases, the gNB 100 can adapt the DMRS transmission to combat the impact of excessive delay spread. Switching BWP, carrier or RAT to combat excessive delay spread is relatively easier and conventional techniques can be employed. Instead in the following disclosure details are provided to illustrate the DMRS pattern adaptation according to embodiments of the invention. To enable a robust DMRS pattern, the UE 300 can receive a second control message 504 from the gNB 100 indicating the specified DMRS pattern configuration, or the UE 300 can blindly detect a DMRS pattern based on received DMRS symbols. These different options at the gNB 100 and the UE 300 yield three embodiments of the invention comprising different signaling schemes introduced in a wireless communication system 500. Hence, to enable the network adaptations under excessive channel delay spread, three possible non-limiting embodiments of implementing the specified DMRS antenna port configuration at the gNB 100 are herein presented.

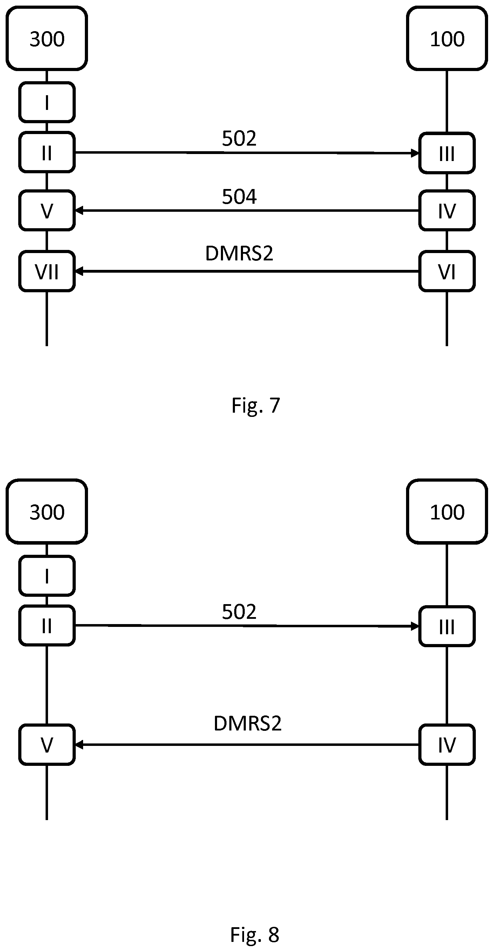

In an embodiment, which is shown in Fig. 7, a UE assignment signaling in the uplink and an indicator signaling in the downlink are required. The UE assignment signaling in the uplink indicates excessive channel delay, and the indicator in the downlink from the gNB 100 indicates a specified DMRS antenna port configuration. The embodiment shown in Fig. 7 comprises the steps:
I. The UE 300 receives DMRS from the gNB 100 according to a first DMRS pattern (not shown). The UE 300 determines excessive channel delay spread of a radio channel using any conventional method know in the art;
II. The UE 300 sends a first control message 502 indicating the excessive delay spread to the gNB 100 upon determining the excessive channel delay spread. The signaling can e.g. be performed in the physical uplink control channel (PUCCH) or in high layer signaling;
III. Upon receiving the first control message 502, the gNB 100 prepares to adapt its transmission of DMRS to the UE 300;
IV. The gNB 100 indicates the new DMRS transmission scheme, i.e. a second DMRS pattern, to the UE 300 though downlink control signaling in the form of a second control message 504;
V. The UE 300 prepares for the reception of new DMRS pattern based on the content of the second control message 504;
VI. The gNB 100 adapts the transmission of DMRS to the UE 300 according to the first control message 502, i.e. transmits DMRS to the UE 300 according to a second DMRS pattern comprising nulled REs denoted DMRS2 in the Fig.; and
VII. The UE 300 applies corresponding reception method/algorithm for the new DMRS pattern. The reception methods at the UE 300 are elaborated more in detail in the following disclosure.

For the uplink report to indicate an excessive delay spread to the gNB 100 (or network), a signaling-like uplink control information, e.g. uplink control information (UCI), can be introduced for fast changing scenarios. If the excessive delay status changes slowly, a high layer signaling, such as medium access control (MAC) control element (CE) or radio resource control (RRC) signaling is more suitable for this indication of excessive delay spread.

For the downlink indication from the gNB 100 (or the network) to the UE 300, the above mechanism can be implemented either by introducing an indication in downlink control information (DCI) fields in fast changing scenarios. If the excessive delay status changes slowly, high layer signaling and instead be used, such as MAC-CE or RRC signaling to indication the DMRS pattern information.

In an embodiment which is shown in Fig. 8, only an assignment signaling in the uplink is required. In the uplink signaling the UE assignment signaling in the uplink indicates excessive channel delay, and the UE 300 performs blind detection afterwards without receiving an indicator in the downlink from the gNB 100. The embodiment shown in Fig. 8 comprises the steps:
I. The UE 300 receives DMRS from the gNB 100 according to a first DMRS pattern (not shown). The UE 300 determines excessive channel delay spread of a radio channel;
II. The UE 300 sends a first control message 502 indicating excessive delay spread through uplink control signaling to the gNB 100;
III. Upon receiving the first control message 502 the gNB 100 prepares to adapt its transmission of DMRS to the UE 300;
IV. The gNB 100 adapts the transmission of DMRS to the UE 300 according to the first control message 502, i.e. transmits DMRS according to a second DMRS pattern denoted DMRS2 in the Fig.; and
V. The UE 300 applies blind detection on the received DMRS according to the second DMRS pattern from the gNB 100 using corresponding reception method.

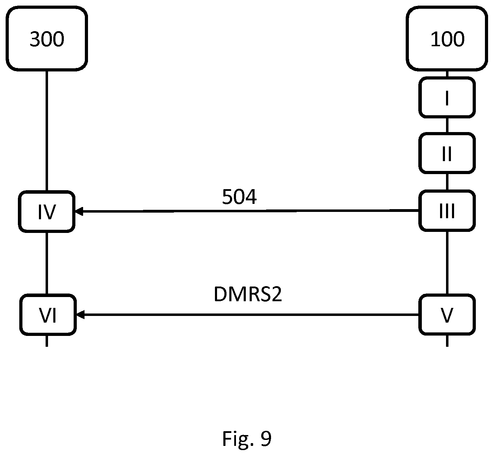

In an embodiment which is shown in Fig. 9 the gNB 100 adjusts the DMRS antenna port configuration without receiving uplink information from the UE 300 about excessive delay spread but sends an indicator in the downlink to indicate a specified DMRS pattern configuration. The embodiment shown in Fig. 9 comprises the steps:
I. The gNB transmits DMRS according to a first DMRS pattern to the UE 300 (not shown);
II. The gNB 100 detects excessive delay spread of the radio channel;
III. The gNB 100 indicates the new DMRS transmission scheme, i.e. a second DMRS pattern, to the UE 300 though downlink control signaling in the form of a second control message 504;
IV. The UE 300 prepares for the reception of new DMRS pattern based on the content of the second control message 504;
V. The gNB 100 adapts the transmission of DMRS to the UE 300, i.e. transmits DMRS according to a second DMRS pattern to the UE 300 denoted DMRS2 in the Fig.; and
VI. The UE 300 adapts corresponding reception method for the second DMRS pattern.

In the following disclosure two exemplary embodiments for reception methods at the UE 300 are described when the second DMRS pattern transmitted by the gNB 100 has a comb-like and sparse structure.

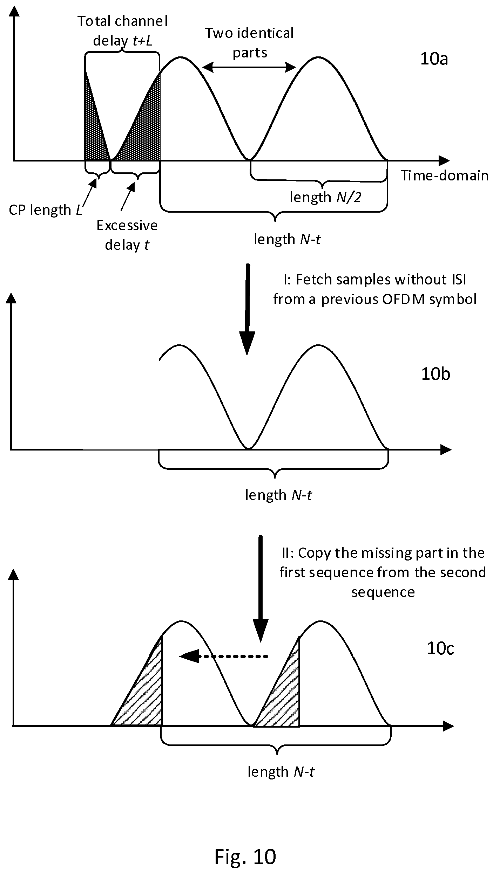

Fig. 10 illustrate a channel estimation algorithm at the UE 300 to form the N samples for fast Fourier transform (FFT). Fig. 10a shows received time-domain DMRS in one OFDM symbol with excessive channel delay spread. Assuming CP length of L, the total channel delay is *t*+*L,* i.e. the excessive channel delay spread over CP is *t* and hence not larger than N/2. The first *t* samples due to the excessive channel delay spread are polluted by ISI from a previous transmitted OFDM symbol. In Fig. 10, in a first step I, *t*+*L* samples which are polluted by ISI are removed corresponding to the CP and excessive delay part, and hence only *N-t* samples not polluted by ISI are fetched out. The result of the processing in step I is shown in Fig. 10b. In a second step II in Fig. 10, by using the property that the first *N*/2 part and the second *N*/2 part are identical, the first *t* samples are copied from the second part and added to the front part, which yields a complete length *N* samples as shown in Fig. 10c. Finally, a size-*N* FFT operation transfers the time-domain DMRS shown in Fig. 10c into the frequency-domain, and a channel estimation is obtained without ISI or ICI. The only disadvantage of the method illustrated in Fig. 10 is a marginal diversity loss due to using same *t* samples twice. However, when *t*<<*N*/*2,* the loss is insignificant.

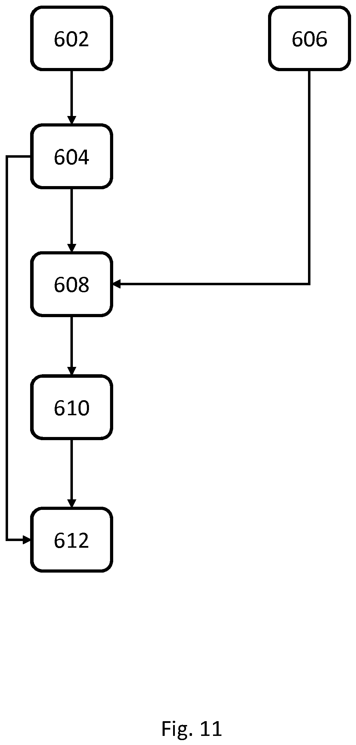

Fig. 11 shows a flowchart of a channel estimation algorithm for a UE 300. In Fig. 11, two *N*/2 size FFTs are performed on time domain samples to obtain two channel estimations and thereafter combine the two channel estimations so as to derive a combined channel estimation with higher accuracy, in particular when *t≈N*/*2.* since in this case almost the entire first half part is corrupted by ISI and shall not be used for channel estimation before interference is removed from it.

In step 602 an *N*/2 size FFT is performed on the second *N*/2 samples of the time domain samples of received DMRS after removal of CP so that frequency domain DMRS samples are recovered.

In step 604 an initial channel estimation is obtained from the recovered frequency domain DMRS samples using the second *N*/2 time domain samples.

In step 606 a corresponding N/2 size FFT is performed on the first *N*/2 samples of the time domain samples of the received DMRS after removal of CP so that frequency domain DMRS samples are recovered again (with ISI and/or ICI).

In step 608 the ISI and/or ICI of the first *N*/2 part samples are reconstructed and thereafter removed from the frequency domain DMRS samples recovered from the first *N*/2 time domain sample by cancelation in either the time domain or the frequency domain.

In step 610 an additional channel estimation is obtained based on the ISI and/or ICI cancelled frequency domain samples of the first part derived from step 608.

In step 612 the initial channel estimation and the additional estimation are combined which results in a combined channel estimation with improved accuracy.

It is envisaged that embodiments of the invention can be implemented in suitable communication standards, such as LTE and NR. Previously, it has been described how to implement the present solution for DMRS configuration type 1 maxLength = 1 and maxLength = 1, respectively. Further, in this section a non-limiting proposal is given to specification changes for DL excessive channel delay spread mode indicator in physical layer for DMRS for PDSCH in TS 38.212 f40, where the following exemplary text section could e.g. be added to indicate excessive channel delay mode with the use of 1 bit:
"1" is mapped to indicate to UE that other orthogonal DMRS ports are reserved as null subcarriers without data transmission for the same UE and also without DMRS transmission for another UE when a UE is configured with DMRS configuration type 1 and the number of DMRS CDM groups without data is 2. Otherwise, "0".

The client device 300 herein, may be denoted as a user device, a User Equipment (UE), a mobile station, an internet of things (loT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 100 herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access node may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the network access node 100 and the client device 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the network access node 100 and the client device 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A network access node (100) for a wireless communication system (500), the network access node (100) being configured to
transmit demodulation reference signals, DMRSs, according to a first DMRS pattern in a radio channel to a client device (300);
upon determining that a delay spread of the radio channel exceeds a cyclic prefix length of the first DMRS pattern obtaining a second DMRS pattern formed from the first DMRS pattern with one or more nulled resource elements associated with DMRSs, wherein no transmission is scheduled in the nulled resource elements of the second DMRS pattern, the resource elements are nulled in an OFDM symbol that carried the DMRS pattern and the DMRS pattern of the second DMRS pattern forms a comb structure;
transmit DMRSs according to the second DMRS pattern to the client device (300).

2. The network access node (100) according to claim 1, wherein the second DMRS pattern is of DMRS configuration type 1, and wherein resource elements for antenna ports 0/1/4/5 or antenna ports 2/3/6/7 are nulled.

3. The network access node (100) according to claim 1, wherein the second DMRS pattern is DMRS configuration type 2, and wherein at least resource elements for antenna ports 0/1/6/7, 2/3/8/9 or 4/5/10/11 are nulled.

4. The network access node (100) according to any one of the preceding claims, wherein determining that the delay spread of the radio channel exceeds the cyclic prefix length comprises
receive a first control message (502) from the client device (300), wherein the first control message (502) indicates that the delay spread of the radio channel exceeds the cyclic prefix length.

5. The network access node (100) according to claim 4, wherein the first control message (502) is received in a physical uplink control channel, PUCCH, a medium access control control element, MAC CE, or in radio resource control, RRC, signaling.

6. A client device (300) for a wireless communication system (500), the client device (300) being configured to
receive DMRSs according to a first DMRS pattern in a radio channel from a network access node (100);
upon determining that a delay spread of the radio channel exceeds a cyclic prefix length of the first DMRS pattern transmit a first control message (502) to the network access node (100), wherein the first control message (502) indicates that the delay spread of the radio channel exceeds the cyclic prefix length;
receive a second control message (504) from the network access node (100), wherein the second control message (504) indicates the transmission of DMRSs according to a second DMRS pattern, wherein the second DMRS pattern is formed from the first DMRS pattern with one or more nulled resource elements associated with DMRSs, wherein no transmission is scheduled in the nulled resource elements of the second DMRS pattern, the resource elements are nulled in an OFDM symbol that carried the DMRS pattern and the DMRS pattern of the second DMRS pattern forms a comb structure; and
receive DMRSs according to the second DMRS pattern from the network access node (100).

7. The client device (300) according to claim 6, wherein the second DMRS pattern is of DMRS configuration type 1, and wherein resource elements for antenna ports 0/1/4/5 or antenna ports 2/3/6/7 are nulled.

8. The client device (300) according to claim 6, wherein the second DMRS pattern is DMRS configuration type 2, and wherein at least resource elements for antenna ports 0/1/6/7, 2/3/8/9 or 4/5/10/11 are nulled.

9. A method (200) for a network access node (100), the method (200) comprising
transmitting (202) demodulation reference signals, DMRSs, according to a first DMRS pattern in a radio channel to a client device (300);
upon determining (204) that a delay spread of the radio channel exceeds a cyclic prefix length of the first DMRS pattern obtaining a second DMRS pattern formed from the first DMRS pattern with one or more nulled resource elements associated with DMRSs, wherein no transmission is scheduled in the nulled resource elements of the second DMRS pattern, the resource elements are nulled in an OFDM symbol that carried the DMRS pattern and the DMRS pattern of the second DMRS pattern forms a comb structure;
transmitting (206) DMRSs according to the second DMRS pattern to the client device (300).

10. A method (400) for a client device (300), the method (400) comprising
receiving (402) DMRSs according to a first DMRS pattern in a radio channel from a network access node (100);
upon determining (404) that a delay spread of the radio channel exceeds a cyclic prefix length of the first DMRS pattern transmit a first control message (502) to the network access node (100), wherein the first control message (502) indicates that the delay spread of the radio channel exceeds the cyclic prefix length;
receiving (406) a second control message (504) from the network access node (100), wherein the second control message (504) indicates the transmission of DMRSs according to a second DMRS pattern, wherein the second DMRS pattern is formed from the first DMRS pattern with one or more nulled resource elements associated with DMRSs, wherein no transmission is scheduled in the nulled resource elements of the second DMRS pattern, the resource elements are nulled in an OFDM symbol that carried the DMRS pattern and the DMRS pattern of the second DMRS pattern forms a comb structure; and
receiving (408) DMRSs according to the second DMRS pattern from the network access node (100).

11. A computer program with a program code causing a network access node to perform a method according to claim when the computer program runs on a processorof the network access node.

12. A computer program with a program code causing a client device to perform a method according to claim 10 when the computer program runs on a processor of the client device.

## Patentansprüche

1. Netzzugangsknoten (100) für ein Drahtloskommunikationssystem (500), wobei der Netzzugangsknoten (100) ausgelegt ist zum
Übertragen von Demodulationsreferenzsignalen, DMRSs, gemäß einem ersten DMRS-Muster in einem Funkkanal an eine Client-Vorrichtung (300);
nach einem Bestimmen, dass eine Verzögerungsaufspreizung des Funkkanals eine Länge eines zyklischen Präfixes des ersten DMRS-Musters überschreitet, Erhalten eines zweiten DMRS-Musters, das aus dem ersten DMRS-Muster mit einem oder mehreren unterdrückten Ressourcenelementen, die DMRSs zugeordnet sind, gebildet ist, wobei keine Übertragung in den unterdrückten Ressourcenelementen des zweiten DMRS-Musters geplant ist, die Ressourcenelemente in einem OFDM-Symbol, das das DMRS-Muster enthalten hat, unterdrückt sind und das DMRS-Muster des zweiten DMRS-Musters eine Kammstruktur bildet;
Übertragen von DMRSs gemäß dem zweiten DMRS-Muster an die Client-Vorrichtung (300).

2. Netzzugangsknoten (100) nach Anspruch 1, wobei das zweite DMRS-Muster von einem DMRS-Konfigurationstyp 1 ist und wobei Ressourcenelemente für Antennenanschlüsse 0/1/4/5 oder Antennenanschlüsse 2/3/6/7 unterdrückt sind.

3. Netzzugangsknoten (100) nach Anspruch 1, wobei das zweite DMRS-Muster von einem DMRS-Konfigurationstyp 2 ist und wobei zumindest Ressourcenelemente für Antennenanschlüsse 0/1/6/7, 2/3/8/9 oder 4/5/10/11 unterdrückt sind.

4. Netzzugangsknoten (100) nach einem der vorhergehenden Ansprüche, wobei das Bestimmen, dass die Verzögerungsaufspreizung des Funkkanals die Länge eines zyklischen Präfixes überschreitet, umfasst:
Empfangen einer ersten Steuernachricht (502) von der Client-Vorrichtung (300), wobei die erste Steuernachricht (502) angibt, dass die Verzögerungsaufspreizung des Funkkanals die Länge eines zyklischen Präfixes überschreitet.

5. Netzzugangsknoten (100) nach Anspruch 4, wobei die erste Steuernachricht (502) in einem physischen Uplink-Steuerkanal, PUCCH, einem Medienzugriffssteuerungssteuerelement, MAC-CE, oder in einer Funkressourcensteuerungssignalübertragung, RRC-Signalübertragung, empfangen wird.

6. Client-Vorrichtung (300) für ein Drahtloskommunikationssystem (500), wobei die Client-Vorrichtung (300) ausgelegt ist zum
Empfangen von DMRSs gemäß einem ersten DMRS-Muster in einem Funkkanal von einem Netzzugangsknoten (100);
nach einem Bestimmen, dass eine Verzögerungsaufspreizung des Funkkanals eine Länge eines zyklischen Präfixes des ersten DMRS-Musters überschreitet, Übertragen einer ersten Steuernachricht (502) an den Netzzugangsknoten (100), wobei die erste Steuernachricht (502) angibt, dass die Verzögerungsaufspreizung des Funkkanals die Länge eines zyklischen Präfixes überschreitet;
Empfangen einer zweiten Steuernachricht (504) von dem Netzzugangsknoten (100), wobei die zweite Steuernachricht (504) die Übertragung von DMRSs gemäß einem zweiten DMRS-Muster angibt, wobei das zweite DMRS-Muster aus dem ersten DMRS-Muster mit einem oder mehreren unterdrückten Ressourcenelementen, die DMRSs zugeordnet sind, gebildet ist, wobei keine Übertragung in den unterdrückten Ressourcenelementen des zweiten DMRS-Musters geplant ist, die Ressourcenelemente in einem OFDM-Symbol, das das DMRS-Muster enthalten hat, unterdrückt sind und das DMRS-Muster des zweiten DMRS-Musters eine Kammstruktur bildet; und
Empfangen von DMRSs gemäß dem zweiten DMRS-Muster von dem Netzzugangsknoten (100).

7. Client-Vorrichtung (300) nach Anspruch 6, wobei das zweite DMRS-Muster von einem DMRS-Konfigurationstyp 1 ist und wobei Ressourcenelemente für Antennenanschlüsse 0/1/4/5 oder Antennenanschlüsse 2/3/6/7 unterdrückt sind.

8. Client-Vorrichtung (300) nach Anspruch 6, wobei das zweite DMRS-Muster von einem DMRS-Konfigurationstyp 2 ist und wobei zumindest Ressourcenelemente für Antennenanschlüsse 0/1/6/7, 2/3/8/9 oder 4/5/10/11 unterdrückt sind.

9. Verfahren (200) für einen Netzzugangsknoten (100), wobei das Verfahren (200) umfasst:
Übertragen (202) von Demodulationsreferenzsignalen, DMRSs, gemäß einem ersten DMRS-Muster in einem Funkkanal an eine Client-Vorrichtung (300);
nach einem Bestimmen (204), dass eine Verzögerungsaufspreizung des Funkkanals eine Länge eines zyklischen Präfixes des ersten DMRS-Musters überschreitet, Erhalten eines zweiten DMRS-Musters, das aus dem ersten DMRS-Muster mit einem oder mehreren unterdrückten Ressourcenelementen, die DMRSs zugeordnet sind, gebildet ist, wobei keine Übertragung in den unterdrückten Ressourcenelementen des zweiten DMRS-Musters geplant ist, die Ressourcenelemente in einem OFDM-Symbol, das das DMRS-Muster enthalten hat, unterdrückt sind und das DMRS-Muster des zweiten DMRS-Musters eine Kammstruktur bildet;
Übertragen (206) von DMRSs gemäß dem zweiten DMRS-Muster an die Client-Vorrichtung (300).

10. Verfahren (400) für eine Client-Vorrichtung (300), wobei das Verfahren (400) umfasst:
Empfangen (402) von DMRSs gemäß einem ersten DMRS-Muster in einem Funkkanal von einem Netzzugangsknoten (100);
nach einem Bestimmen (404), dass eine Verzögerungsaufspreizung des Funkkanals eine Länge eines zyklischen Präfixes des ersten DMRS-Musters überschreitet, Übertragen einer ersten Steuernachricht (502) an den Netzzugangsknoten (100), wobei die erste Steuernachricht (502) angibt, dass die Verzögerungsaufspreizung des Funkkanals die Länge eines zyklischen Präfixes überschreitet;
Empfangen (406) einer zweiten Steuernachricht (504) von dem Netzzugangsknoten (100), wobei die zweite Steuernachricht (504) die Übertragung von DMRSs gemäß einem zweiten DMRS-Muster angibt, wobei das zweite DMRS-Muster aus dem ersten DMRS-Muster mit einem oder mehreren unterdrückten Ressourcenelementen, die DMRSs zugeordnet sind, gebildet ist, wobei keine Übertragung in den unterdrückten Ressourcenelementen des zweiten DMRS-Musters geplant ist, die Ressourcenelemente in einem OFDM-Symbol, das das DMRS-Muster enthalten hat, unterdrückt sind und das DMRS-Muster des zweiten DMRS-Musters eine Kammstruktur bildet; und
Empfangen (408) von DMRSs gemäß dem zweiten DMRS-Muster von dem Netzzugangsknoten (100).

11. Computerprogramm mit einem Programmcode, der einen Netzzugangsknoten zum Durchführen eines Verfahrens nach Anspruch 9 veranlasst, wenn das Computerprogramm auf einem Prozessor des Netzzugangsknotens ausgeführt wird.

12. Computerprogramm mit einem Programmcode, der eine Client-Vorrichtung zum Durchführen eines Verfahrens nach Anspruch 10 veranlasst, wenn das Computerprogramm auf einem Prozessor der Client-Vorrichtung ausgeführt wird.

## Revendications

1. Noeud d'accès de réseau (100) pour un système de communication sans fil (500), le noeud d'accès de réseau (100) étant configuré pour
transmettre des signaux de référence de démodulation, DMRS, selon un premier modèle de DMRS, dans un canal radio, à un dispositif client (300) ;
à la suite de la détermination qu'un défilement du temps de propagation du canal radio dépasse une longueur de préfixe cyclique du premier modèle de DMRS, obtenir un second modèle de DMRS formé à partir du premier modèle de DMRS avec un ou plusieurs éléments de ressource nullifiés associés à des DMRS, dans lequel aucune transmission n'est ordonnancée dans les éléments de ressource nullifiés du second modèle de DMRS, les éléments de ressource sont nullifiés dans un symbole OFDM qui a porté le modèle de DMRS et le modèle de DMRS du second modèle de DMRS forme une structure de peigne ;
transmettre des DMRS, selon le second modèle de DMRS, au dispositif client (300).

2. Noeud d'accès de réseau (100) selon la revendication 1, dans lequel le second modèle de DMRS est de configuration de DMRS type 1, et dans lequel des éléments de ressource pour des ports d'antenne 0/1/4/5 ou des ports d'antenne 2/3/6/7 sont nullifiés.

3. Noeud d'accès de réseau (100) selon la revendication 1, dans lequel le second modèle de DMRS est de configuration de DMRS type 2, et dans lequel au moins des éléments de ressource pour des ports d'antenne 0/1/6/7, 2/3/8/9 ou 4/5/10/11 sont nullifiés.

4. Noeud d'accès de réseau (100) selon l'une quelconque des revendications précédentes, dans lequel la détermination que le défilement du temps de propagation du canal radio dépasse la longueur de préfixe cyclique comprend le fait de
recevoir un premier message de contrôle (502) à partir du dispositif client (300), dans lequel le premier message de contrôle (502) indique que le défilement du temps de propagation du canal radio dépasse la longueur de préfixe cyclique.

5. Noeud d'accès de réseau (100) selon la revendication 4, dans lequel le premier message de contrôle (502) est reçu dans un canal de contrôle de liaison montante physique, PUCCH, un élément de contrôle de contrôle d'accès au support, MAC CE, ou dans une signalisation de contrôle de ressources radio, RRC.

6. Dispositif client (300) pour un système de communication sans fil (500), le dispositif client (300) étant configuré pour
recevoir des DMRS, selon un premier modèle de DMRS, dans un canal radio, à partir d'un noeud d'accès de réseau (100) ;
à la suite de la détermination qu'un défilement du temps de propagation du canal radio dépasse une longueur de préfixe cyclique du premier modèle de DMRS, transmettre un premier message de contrôle (502) au noeud d'accès de réseau (100), dans lequel le premier message de contrôle (502) indique que le défilement du temps de propagation du canal radio dépasse la longueur de préfixe cyclique ;
recevoir un second message de contrôle (504) à partir du noeud d'accès de réseau (100), dans lequel le second message de contrôle (504) indique la transmission de DMRS selon un second modèle de DMRS, dans lequel le second modèle de DMRS est formé à partir du premier modèle de DMRS avec un ou plusieurs éléments de ressource nullifiés associés à des DMRS, dans lequel aucune transmission n'est ordonnancée dans les éléments de ressource nullifiés du second modèle de DMRS, les éléments de ressource sont nullifiés dans un symbole OFDM qui a porté le modèle de DMRS et le modèle de DMRS du second modèle de DMRS forme une structure de peigne ; et
recevoir des DMRS, selon le second modèle de DMRS, à partir du noeud d'accès de réseau (100).

7. Dispositif client (300) selon la revendication 6, dans lequel le second modèle de DMRS est de configuration de DMRS type 1, et dans lequel des éléments de ressource pour des ports d'antenne 0/1/4/5 ou des ports d'antenne 2/3/6/7 sont nullifiés.

8. Dispositif client (300) selon la revendication 6, dans lequel le second modèle de DMRS est de configuration de DMRS type 2, et dans lequel au moins des éléments de ressource pour des ports d'antenne 0/1/6/7, 2/3/8/9 ou 4/5/10/11 sont nullifiés.

9. Procédé (200) pour un noeud d'accès de réseau (100), le procédé (200) comprenant la transmission (202) des signaux de référence de démodulation, DMRS, selon un premier modèle de DMRS, dans un canal radio, à un dispositif client (300) ;
à la suite de la détermination (204) qu'un défilement du temps de propagation du canal radio dépasse une longueur de préfixe cyclique du premier modèle de DMRS, l'obtention d'un second modèle de DMRS formé à partir du premier modèle de DMRS avec un ou plusieurs éléments de ressource nullifiés associés à des DMRS, dans lequel aucune transmission n'est ordonnancée dans les éléments de ressource nullifiés du second modèle de DMRS, les éléments de ressource sont nullifiés dans un symbole OFDM qui a porté le modèle de DMRS et le modèle de DMRS du second modèle de DMRS forme une structure de peigne ;
la transmission (206) de DMRS, selon le second modèle de DMRS, au dispositif client (300).

10. Procédé (400) pour un dispositif client (300), le procédé (400) comprenant
la réception (402) de DMRS, selon un premier modèle de DMRS, dans un canal radio, à partir d'un noeud d'accès de réseau (100) ;
à la suite de la détermination (404) qu'un défilement du temps de propagation du canal radio dépasse une longueur de préfixe cyclique du premier modèle de DMRS, la transmission d'un premier message de contrôle (502) au noeud d'accès de réseau (100), dans lequel le premier message de contrôle (502) indique que le défilement du temps de propagation du canal radio dépasse la longueur de préfixe cyclique ;
la réception (406) d'un second message de contrôle (504) à partir du noeud d'accès de réseau (100), dans lequel le second message de contrôle (504) indique la transmission de DMRS selon un second modèle de DMRS, dans lequel le second modèle de DMRS est formé à partir du premier modèle de DMRS avec un ou plusieurs éléments de ressource nullifiés associés à des DMRS, dans lequel aucune transmission n'est ordonnancée dans les éléments de ressource nullifiés du second modèle de DMRS, les éléments de ressource sont nullifiés dans un symbole OFDM qui a porté le modèle de DMRS et le modèle de DMRS du second modèle de DMRS forme une structure de peigne ; et
la réception (408) de DMRS, selon le second modèle de DMRS, à partir du noeud d'accès de réseau (100).

11. Programme d'ordinateur, avec un code de programme faisant en sorte qu'un noeud d'accès de réseau réalise un procédé selon la revendication 9 lorsque le programme d'ordinateur est exécuté sur un processeur du noeud d'accès de réseau.

12. Programme d'ordinateur, avec un code de programme faisant en sorte qu'un dispositif client réalise un procédé selon la revendication 10 lorsque le programme d'ordinateur est exécuté sur un processeur du dispositif client.
